# EUROPÄISCHE PATENTANMELDUNG

(11) **EP 3 015 706 A1**
(43) Veröffentlichungstag der Anmeldung: **04.05.2016**
(21) Anmeldenummer: 14816969.1
(22) Anmeldetag: 19.06.2014
(51) Int. Cl.: F03D 9/00, F03D 1/00

(54) **WINDTURBINE FÜR ELEKTROFAHRZEUG**

(30) Priorität: 24.06.2013 RU 2013128924
(71) Anmelder: Noroian, Gevorg Serezaevih, Moscow 115582 (RU)
(72) Erfinder: Noroian, Gevorg Serezaevih, Moscow 115582 (RU)
(74) Vertreter: Jeck, Anton
(86) Internationale Anmeldenummer: PCT/EA2014/000015
(87) Internationale Veröffentlichungsnummer: WO 2014/206423

(57) **Zusammenfassung**

Die Erfindung bezieht sich auf Maschinenbau und kann bei Nachrüstung / Umbau von Elektromobilen angewendet werden, um den elektrischen Strom beim Fahren zu sparen. Beansprucht ist eine Windkraftanlage eines Elektromobils mit einer zylinderförmigen Kamera, die Windräder aufnimmt. Dabei kann eine Welle der Windkraftanlage sowohl stehend als auch liegend oder schräg in einem beliebigen Winkel angeordnet werden. Die Welle ist mit einer Scheibe versehen, an der Turbinenschaufeln angebaut sind. Die Turbinenschaufeln bestehen aus einem Stützträger, der an der Scheibe befestigt wird, und auf dem Stützträger werden Oberflügel mit Hilfe von Bögen aufgebaut. Auf jeder Turbinenschaufel sind mehrere Bögen je nach der Breite und Länge der Turbinenschaufel angebaut; die Bögen sind auf dem Stützträger drehbar, wodurch der Winkel von Oberflügeln in Bezug auf einen Untersatz und auf die Luftstromerfassung verändert wird, die Bögen sind mit Klemmschrauben festgemacht, die Höhe der Bögen ist von der Turbinengröße abhängig, dabei werden die Bögen ab dem Endpunkt der Turbinenschaufel angeordnet; als ein Untersatz für die Turbine dient ein Bauteil, an dem die Turbine aufgestellt wird. Zwischen der Turbine und dem Untersatz ist ein kleiner Raum vorgesehen, der als Luftableiter wirkt. Je breiter die Turbinenschaufel, desto größer ist der Raum für die Luftableitung dazwischen, wobei ohne Luftableiter eine Lufttasche entsteht und der Wirkungsgrad der Turbine sinkt. Die Erfindung stellt sicher, dass die Arbeitsfläche der Turbine vergrößert wird und dass die Turbine auf einem beliebigen Bauteil oder auf einem beliebigen Aggregat angebaut werden kann.

## Beschreibung

Die Erfindung bezieht sich auf den Maschinenbau, und zwar auf eine Windturbine für ein Elektromobil und kann für die Nachrüstung bzw. den Umbau des Elektromobils verwendet werden.

Ein Pyramiden-Windmotor für ein Fahrzeug enthält einen Windempfänger. Der Windempfänger ist in Form eines Konfusers ausgebildet und mit einer Luftleitung verbunden. Die Luftströmung des Gegenwinds fließt in eine zylinderförmige Kammer, in der ein Windrad eingebaut ist. Danach fließt die Luftströmung in einen Luftkanal in Form zweier Schläuche, die an beiden Seiten des Fahrzeugs austreten. Aus diesen Schläuchen tritt die genutzte Luftströmung ins Freie und erzeugt einen aerodynamischen Effekt, indem die Luft aus den Schläuchen abgesaugt wird. Ein Stromerzeuger ist außerhalb der zylinderförmigen Kammer angeordnet (Patent UA 17750 2009. http:www.a!tenerg.ru/energiya-iobovogo-vozdushnogo-potoka/).

Die Mängel der bekannten Erfindung sind eine komplizierte Bauweise und ein geringer aerodynamischer Nutzeffekt. Darüber hinaus ist es unzweckmäßig, den gesamten Gegenwind in eine oder zwei Turbinen zu richten.

Der der vorliegenden Erfindung nächstkommende Stand der Technik ist ein Schiff mit einem Windmotor, der an einer Welle befestigte Flügel enthält. Die Flügel sind mit einer Schutzabdeckung um die Hälfte abgedeckt. Am unteren Ende der Welle ist eine Kupplung befestigt, die für die Bewegungsübertragung sorgt.

Der Mangel dieses Prototyps ist eine geringe Arbeitsfläche der Turbine.

Das Wesen der vorliegenden Erfindung ist die Batterieaufladung bei Fahrt, was durch Gegenwind mit Hilfe einer Turbine mit einer vergrößerten Arbeitsfläche erreicht wird. Der technische Effekt der beanspruchten Erfindung ist die Vergrößerung der Turbinenarbeitsfläche, eine einfache und kostengünstige Fertigung sowie die Möglichkeit, die Einrichtung auf beliebige Bauteile eines beliebigen Maschinensatzes des Elektromobils zu montieren. Die Turbine für ein Elektromobil besteht aus einer Welle, die an einer Seite mit einer Scheibe und an der anderen Seite mit einem Zahnrad oder einer Treibscheibe versehen ist, um die Bewegung an einen Stromerzeuger zu übertragen. Der Stromerzeuger kann auch als Einbaustromerzeuger ausgebildet werden. Die Welle kann sowohl stehend als auch liegend oder auch schräg in einem beliebigen Winkel positioniert werden. An der Scheibe werden Turbinenschaufeln angebaut. Die Turbinenschaufeln bestehen aus einem Stützträger, der an der Scheibe befestigt ist. Auf dem Stützträger wird ein Oberflügel mit Hilfe von Bögen angebaut. Die Bögen sowie die Oberflügel sind aus einem flachen elastischen Material gefertigt. Die Bogenlänge fällt mit der Oberflügelbreite an der Einbaustelle der Bögen zusammen. Dabei stehen die Bögen senkrecht zu den Oberflügeln. Gleichzeitig wirken die Bögen als Versteifungsrippen. Die Turbinenschaufeln werden mit Hilfe der Bögen mit Stützträgern verbunden und nehmen einen beachtlichen Anteil des Winddrucks auf. Mit ihrer Hilfe wird die Luftwindströmung in einen vorhergehenden Abschnitt geleitet. An jeder Turbinenschaufel werden einige Bögen je nach Breite und Länge der Turbinenschaufel so aufgebaut, dass sie einander abdecken, wenn man von der Seite des Gegenwindes schaut. Die auf dem Stützträger angeordneten Bögen sind drehbar, wobei der Winkel der Oberflügel zu einem Untersatz und zur Luftstromerfassung veränderbar ausgeführt ist. Die Bögen werden mit Klemmschrauben befestigt. Die Höhe der Bögen hängt von der Turbinengröße ab. Dabei können die Bögen auf einer Turbinenschaufel unterschiedlich sein, zum Beispiel vom Mittelpunkt anwachsend oder umgekehrt. Um den Wirkungsgrad der Turbine zu steigern, werden die Bögen ab dem Endpunkt der Turbinenschaufel und zum Mittelpunkt hin so aufgebaut, dass sie einander abdecken, wenn man von der Windseite schaut.

Als Untersatz für die Turbine wird ein Bauteil eines Elektromobils angesehen, an dem die Turbine aufgestellt wird. Zwischen der Turbine und dem Untersatz gibt es einen kleinen Raum, der als Luftablenker für den Luftdurchlauf dient. Je breiter die Turbinenschaufeln sind, desto größer ist der Abstand zwischen den Turbinenschaufeln. Der letzte Bogen wird ganz am Ende der Turbinenschaufel angeordnet. Ein Teil der Turbine, der gegen den Wind dreht, ist im Bauteil eingelassen, auf dem dieser Turbinenteil eingebaut ist. Dieser Turbinenteil wird durch einen Leitflügel abgedeckt, der zugleich die Windströmung auf den Arbeitsteil der Turbine richtet. Die Anzahl der Turbinenschaufeln kann unterschiedlich sein, muss allerdings mindestens drei betragen. Je mehr Turbinenschaufeln vorhanden sind, desto wirksamer ist die Einrichtung. Um den Wirkungsgrad der Turbine zu steigern, werden die Turbinenschaufeln sich überlappend ausgeführt, wodurch die Arbeitsfläche der Turbine vergrößert wird. Auf einem Elektromobil können zahlreiche Turbinen angeordnet werden. Dabei können die Turbinen auf einem beliebigen Bauteil oder auf einem beliebigen Aggregat angebaut werden, auf das der Wind treffen kann. Darüber hinaus kann das Elektromobil bei Wind auch im Stehen aufgeladen werden, wenn es gegen den Wind abgestellt wird.

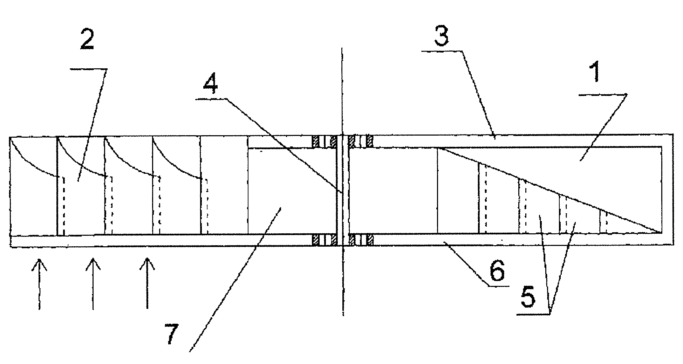

Die Erfindung wird anhand eines in der Figur dargestellten Ausführungsbeispiels näher erläutert.

Das Anfahren des Elektromobils erfolgt mit Hilfe von elektrischen Energiespeichern. Während der Fahrt arbeiten die Windturbinen aufgrund des Gegenwinds. Die durch Flügel 1 aufgefangene Luftströmung wird auf den Untersatz 3 der Turbine geleitet. Bögen 2 leiten die Luftströmung im Kreis über eine Luftleitung 5 in den vorangehenden Abschnitt hinein, so dass darin ein Druck aufgebaut wird. Auf diese Weise tritt die Luftströmung von jeder nächsten Turbinenschaufel in jeden Abschnitt ein, und die Luft strömt von der Turbine durchgehend in der Windflussrichtung, bis die Turbine eine halbe Umdrehung ausgeführt hat. Ein Stützträger 6 ist mit einer Welle 4 starr verbunden. Ein Stromerzeuger 7 erzeugt elektrischen Strom und sorgt für den elektrischen Energievorrat, wobei die Energieerzeugung bei Gefällefahrten den Stromverbrauch mehrfach überschreiten kann.

## Patentansprüche

1. Windturbine für ein Elektromobil mit einer zylinderförmigen, Wind aufnehmenden Kammer,
**dadurch gekennzeichnet,**
**dass** eine Welle (4) stehend, liegend oder schräg in einem beliebigen Winkel auf einer Scheibe angeordnet ist,
**dass** Turbinenschaufeln (1) eingebaut sind, wobei jede Turbinenschaufel (1) auf einem Stützträger (6) angeordnet ist, der an der Scheibe befestigt ist, auf der Oberflügel mit Hilfe von Bögen (2) aufgebaut sind,
**dass** auf jeder Turbinenschaufel (1) jeweils einige Bögen (2) je nach Breite und Länge der Turbinenschaufel derart eingebaut sind, dass die Bögen (2) einander teilweise überdecken, wenn von der Windblasrichtung gesehen wird, dass die Bögen (2) auf dem Stützträger (6) drehbar sind, wodurch der Winkel der Oberflügel in Bezug auf einen Untersatz (3) und auf die Luftstromerfassung veränderlich aus gebildet ist,
**dass** die Bögen mit Klemmschrauben befestigt sind,
**dass** die Bogenhöhe von der Turbinengröße abhängig ist,
**dass** die Bögen auf einer Turbinenschaufel unterschiedlich sind, vom Mittelpunkt anwachsend oder umgekehrt,
**dass** die Bögen ab dem Endpunkt der Turbinenschaufel angeordnet sind, dass die Bogenlänge mit der Oberflügelbreite an ihrer Einbaustelle zusammenfällt,
**dass** die Bögen als Versteifungsrippen wirken und einen beachtlichen Anteil des Winddrucks übernehmen,
**dass** als Untersatz für die Turbine ein Bauteil dient, an dem die Turbine aufgestellt ist,
**dass** zwischen der Turbine und dem Untersatz ein kleiner Raum vorgesehen ist, der als Luftablenker derart wirkt, dass, je breiter die Turbinenschaufeln ausgebildet sind, desto größer die Luftableiterhöhe bemessen ist,
**dass** jener Teil der Turbine, der gegen den Wind dreht, in den Bauteil eingeschnitten ist.
**dass** die Anzahl der Turbinenschaufeln auch unterschiedlich ist und
**dass** die Turbinenschaufeln zur Vergrößerung ihrer Arbeitsfläche in der Draufsicht einander teilweise abdecken.
